(19) Europäisches Patentamt
European Patent Office
Office européen des brevets

(11) Veröffentlichungsnummer: **0 249 104 B1**

(12) **EUROPÄISCHE PATENTSCHRIFT**

(45) Veröffentlichungstag der Patentschrift: **29.01.92**

(51) Int. Cl.[5]: **B23B 51/02**, B24B 3/26

(21) Anmeldenummer: **87107790.5**

(22) Anmeldetag: **29.05.87**

(54) **Verfahren zum Anschleifen eines Spiralbohrers.**

(30) Priorität: **07.06.86 DE 3619245**

(43) Veröffentlichungstag der Anmeldung:
**16.12.87 Patentblatt 87/51**

(45) Bekanntmachung des Hinweises auf die Patenterteilung:
**29.01.92 Patentblatt 92/05**

(84) Benannte Vertragsstaaten:
**AT BE CH DE ES FR GB IT LI LU NL SE**

(56) Entgegenhaltungen:
**CH-A- 250 713** **DE-B- 1 284 320**
**GB-A- 2 010 142** **GB-A- 2 078 574**
**US-A- 2 903 922** **US-A- 3 109 270**
**US-A- 3 209 493**

**MACHINES AND TOOLING, Band 33, Nr. 1, 1962, Seiten 27-31, Production Engineering Research Association, Melton Mowbray, GB; L.G. DIBNER: "Spiral point drill grinding"**

**TECHNISCHE RUNDSCHAU, Band 63, Nr. 48, 12. November 1971, Seiten 25,27,29, DE; K. HÄUSER: "Anschliffe der Wendelbohrer (Spiralbohrer)"**

**PATENT ABSTRACTS OF JAPAN, Band 8, Nr. 270 (M-344)[1707], 11. Dezember 1984; & JP-A-59 142 012 (TOSHIAKI HOSOI) 15-08-1984**

(73) Patentinhaber: **Hertel Aktiengesellschaft Werkzeuge + Hartstoffe**
**Wehlauer Str. 71-73**
**W-8510 Fürth(DE)**

(72) Erfinder: **Tikal, Franz, Dr.**
**Nonnenstr. 2**
**W-8011 Kirchseeon(DE)**
Erfinder: **Krenzer, Ulrich**
**Sandstr. 4**
**W-8502 Zirndorf(DE)**

(74) Vertreter: **Tergau, Enno, Dipl.-Ing. et al**
**Tergau & Pohl Patentanwälte Hefnersplatz 3**
**Postfach 119347**
**W-8500 Nürnberg 11(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zum Anschliefen eines Sprialbohrers, insbesondere eines vollständig aus Hartmetall bestehenden Bohrers. Wenn in diesem Zusammenhang bevorzugt von Hartmetall als Werkstoff gesprochen ist, so schließt dies auch die Verwendung eines Sinter- oder Verbundwerkstoffes zumindest als Schneidstoff ein.

Es ist allgemein bekannt, daß der Schraubenflächenschliff eines Bohrers in der Nähe der Querschneide zu einem größeren Freiwinkel führt. Dies ist günstig bei kräftigen Vorschüben, und zwar infolge Schwächung der Querschneide. Es werden daher bei Spiralbohrern mit Schraubenflächenschliff zur Verbesserung der Schnittverhältnisse an der Querschneide häufig Korrekturen vorgenommen, z.B. durch Ausspitzen oder durch Anpassen des Seitenspanwinkels an den zu bohrenden Werkstoff (STOCK-TASCHENBUCH der R.Stock AG, Berlin, 3. Aufl. von 1979, S. 40).

Aus US-A-3 109 270 läßt sich ein Verfahren zum Anschleifen eines Spiralbohrers mit vergleichsweise großer Kerndicke und mit durch Schraubenflächenschliff geschliffenen Hauptfreiflächen ableiten, bei welchem zu Beginn des Anschliffes und in einer relativen Drehstellung $\Phi = 0^\circ$ des Bohrers, in der in wesentlichen die Hauptschneide geschliffen wird, die zur Erzeugung der Hauptfreifläche bestimmte Schleifscheibenoberfläche mit ihrer Umfangskontur geringfügig über die Bohrerachse hinaussteht, um ein Schleifen der Bohrerspitze sicherzustellen. Bei diesem Verfahren wird die Schleifscheibe radial aus der Übermittestellung heraus und weiter in eine Vormittestellung fortbewegt, bis sie bei Vollendung des Hauptfreiflächenanschliffs einen Vormitteabstand von der Bohrerachse aufweist.

Bei dem aus US-A-3 109 270 bekannten Bohrer der eingangs genannten Art werden die aus der vergleichsweise großen Kerndicke resultierenden Probleme, nämlich Störung des Spanablaufes und Erhöhung der einwirkenden Reaktionskräfte durch eine spezielle Art der Ausspitzung gelöst. Die Ausspitzung besteht im wesentlichen in einem durch einen zusätzlichen Arbeitsgang angebrachten Anschliff des den Hauptschneiden abgewandten Bereiches der Schneidenfreiflächen. Dadurch weisen die rückwärtigen Freiflächenbereiche einen größeren Freiwinkel auf als die den Hauptschneiden zugewandten, vorderen Freiflächenbereiche. Die vorderen Freiflächenbereiche gehen in einer deutlichen, den Spanabfluß behindernden Kante in die rückwärtigen, einen größeren Freiwinkel aufweisenden Freiflächenbereich über. Das Schleifen der beiden Freiflächenbereiche in zwei aufeinanderfolgenden Schleifvorgängen erfolgt jeweils mit konstantem Axialvorschub des Bohrers relativ zur Schleifscheibenoberfläche. Beim Schleifen des Hauptschneidenbereiches steht die Schleifscheibenoberfläche nicht über die Bohrermitte hinaus. Nach vollendetem Hauptflächenanschliff beträgt der Vormitteabstand der Schleifscheibe weniger als 7% des Bohrerdurchmessers.

Der Erfindung liegt die Aufgabe zugrunde, das Anschleifverfahren für einen Spiralbohrer der eingangs genannten Art so auszugestalten, daß der Bohrer unter Beibehaltung seiner leichten, zentrischen Anbohreigenschaften ein Arbeiten mit hohen Vorschüben erlaubt und trotzdem eine hohe Standzeit gewährleistet. Diese Aufgabe wird durch die im Anspruch 1 aufgeführten Merkmale gelöst.

Der erfindungsgemäß hergestellte Spiralbohrer weist eine weit überdurchschnittliche Kerndicke auf, was seine Stabilität begünstigt. Indessen wird dadurch die Querschneide verlängert. Normalerweise wäre dadurch eine Verschlechterung der Anbohr- und Zerspanungseigenschaften zu erwarten, indem der Bohrer mehr quetscht als schneidet. Dies ist indessen durch das erfindungsgemäße Verfahren nicht der Fall.

Durch den annähernd stetigen Übergang der Querschneide in die Hauptschneide werden Spannungsspitzen entlang der Schneidkante vermieden.

Durch die Verlängerung der Querschneide und die erfindungsgemäße Ausgestaltung des Anschliffes werden die Späne unmittelbar nach ihrer Entstehung durch Umlenkung im Querschneidenbereich verformt und extrem vorgespannt. Den Spänen werden beim Einleiten in die Spankammer zusätzlich hohe Torsionsbelastungen aufgezwungen, die zu einer Kurzbrechwirkung führen.

Die Kurzbrecheigenschaft ermöglicht den leichten Abtransport der Späne über die Spannuten. Die Kurzbrecheigenschaft des Spiralbohrers ist so extrem, daß sich selbst bei vergleichweise erheblich vergrößertem Zerspanungsvolumen die durch die vergrößerte Kerndicke verursachte Verringerung der lichten Spannutquerschnitte nicht nachteilig auswirkt. Durch die Kurzbrecheigenschaft des Spiralbohrers wird die durch die Vergrößerung der Kerndicke bewirkte Verkleinerung des lichten Querschnittes der Spannuten sogar überkompensiert. Der Spiralbohrer kann mit mehrfach größerem Vorschub arbeiten als herkömmliche Spiralbohrer.

Die geringe Zähigkeit des Schneidstoffes Hartmetall bedingt möglichst große Keilwinkel der Schneiden und der Querschneiden.

Der Gegenstand der Erfindung wird anhand der Figuren beispielsweise beschrieben. Es zeigen:

Fig. 1 eine Stirnansicht des Spiralbohrers,

Fig. 2 eine Seitenansicht des Bohrers in Richtung des Blickpfeiles II in Fig. 1,

| | |
|---|---|
| Fig. 3 | eine Seitenansicht entsprechend dem Pfeil III in Fig. 2, |
| Fig. 4 | eine Seitenansicht der Bohrerspitze entsprechend den Pfeilen IV in Fig. 1 und 2, |
| Fig. 5 | einen Teilschnitt entsprechend der Linie V-V in Fig. 1 durch die Bohrerspitze, |
| Fig 6 | eine Seitenansicht der Bohrerspitze entsprechend Fig. 2 während des Anschliffes mit in Drehstellung bei $\Phi = 0^\circ$ im Schleifangriff befindlicher Schleifscheibe, |
| Fig 7 | eine Seitenansicht der Bohrerspitze entsprechend Fig. 3 während des Anschliffes mit in Drehstellung $\Phi = 90^\circ$ (Ende des Anschliffes) im Schleifangriff befindlicher Schleifscheibe, |
| Fig 8 - 12 | eine Stirnansicht des Bohrers analog Fig. 1 in unterschiedlichen Bohrer-Drehstellungen zwischen $\Phi = -30^\circ$ bis $\Phi = +90^\circ$ unter Angabe der Lage der Außenkontur der Schleifscheibe, der Erzeugenden der Freifläche der Hauptschneide und der Kontaktfläche zwischen Bohrer und Schleifscheibe in den einzelnen Drehstellungen, |
| Fig. 13 | ein Schaubild, welches die im Rahmen der Erfindung liegenden Größenbereiche des jeweiligen axialen Spanwinkels der Hauptschneide über den Bohrerhalbmesser vom Zentrum des Bohrers bis zum Bohreraußendurchmesser angibt, |
| Fig. 14 | ein Schaubild zum Anschleifvorgang gemäß Fig. 8 - 12 welches qualitativ die Größen des Radialvorschubes $H_R$ und der Komponenten $H_G$ und $H_A$ des Axialvorschubes des Bohrers, gegenüber der Schleifscheibe in Abhängigkeit von der Bohrerdrehstellung zwischen dem Anschliffbeginn $\Phi = -30^\circ$ und dem Anschliffende $\Phi = 90^\circ$ zeigt, |
| Fig. 15 | ein Vektordiagramm der Zustellvektoren beim Schleifvorgang, |
| Fig. 16 | ein Schaubild zum Anschleifvorgang gemäß Fig. 8 - 12, welches den Verlauf der resultierenden Gesamtzustellung H in Abhängigkeit von der Bohrerdrehstellung zwischen Anschliffbeginn $\Phi = -30^\circ$ und dem Anschliffende $\Phi =$ |
| Fig. 17 | ein modifiziertes Vektordiagramm der Zustellvektoren beim Schleifvorgang. |

Der in den Ausführungsbeispielen dargestellte zweischneidige Spiralbohrer 1 ist mit als Drallnuten ausgebildeten Spannuten 2 in der Anzahl der vorhandenen Hauptschneiden 3 versehen. Die Erfindung kann sinngemäß auch an Spiralbohrern mit mehr als zwei Hauptschneiden und dementsprechend mehr als zwei Spannuten Anwendung finden. Die Spannuten 2 sind in den Bohrerkörper auf eine Tiefe eingearbeitet, die die Kerndicke K (4) bestimmt. Die Hauptschneiden 3 werden im Bereich des Bohrerkerns (Kerndicke 4) durch die Querschneide 6 miteinander verbunden bzw. gehen in die Querschneiden 6 über.

Beim erfindungsgemäßen Bohrer beträgt die Kerndicke K = 4 25 bis 40% des Bohrerdurchmessers 8. Die Schnittrichtung 9 des Bohrers ist durch einen Pfeil gekennzeichnet (Fig.1 ). Die Stirnflächen des Bohrers, d.h. die zwischen den Hauptschneiden 3 und den Umfangsflächen 5 liegenden Flächen bilden die Hauptfreiflächen 10. Die Bohrerspitze trägt die Bezugsziffer 11, der Spitzenwinkel $\sigma$ die Bezugsziffer 12 und der Keilwinkel $\beta_z$ in der Bohrerachse 7 die Bezugsziffer 25.

Der Anschliff des Bohrers erfolgt beim Ausführungsbeispiel durch eine um die ortsfeste Achse 13 rotierende Stirnschleifscheibe 14. Die Relativstellung zwischen Bohrer 1 und Schleifscheibe 14 beim Schleifvorgang ist in Fig. 6 bis 12 dargestellt. Dabei zeigt Fig.6 den Bohrer bei ortsfest gelagerter Schleifscheibe 14 in einer Drehstellung $\Phi = 0^\circ$, in der im wesentlichen die Hauptschneide 3 geschliffen wird. Fig. 7 zeigt den Bohrer 1 in seiner relativen Endstellung gegenüber der Schleifscheibe 14, in der der Bohrer 1 in Richtung 19 des Radialvorschubes $H_R$ translatorisch gegenüber der Schleifscheibe 14 verschoben und um $90^\circ$ in seiner Schnittrichtung 9 weitergedreht ist. In Fig. 7 befindet sich also der Bohrer in der Drehstellung $\Phi = 90^\circ$ - jeweils bezogen auf die Bohrerachse 7 -. Die Drehstellung $\Phi = 90^\circ$ ist die Anschliff-Endstellung des Bohrers.

Die Figuren 8 bis 12 zeigen - ausgehend von dem ersten, noch leichten Eingriff der Schleifscheibe 14 am Beginn des Anschliffes in einer Drehstellung $\Phi = -30^\circ$ des Bohrers 1 (Fig. 8) - den Bohrer in unterschiedlichen, in Schnittrichtung 9 aufeinanderfolgenden Drehstellungen, die über die Drehstellungswinkel $\Phi = 0^\circ$, $30^\circ$ und $60^\circ$ in der Drehstellung $\Phi = 90^\circ$ (Fig. 12) enden. Der Bohrer 1 wird auf seinem Drehweg von $\Phi = -30^\circ$ bis $\Phi = +90^\circ$ translatorisch gegenüber der Schleifscheibe 14 in Richtung 19 radial verschoben. Dieser Radialvorschub $H_R$ des Bohrers 1 ist aus der veränderten Relativlage der Umfangskontur 15 der Schleifscheibe 14 zur Bohrerachse 7 in den Fig. 8 bis 12 erkennbar. In den einzelnen Drehstellungen des Bohrers sind jeweils die Erzeugende 16 und in Schraffur die Kontaktfläche 17 der Schleifscheibe 14 kenntlich gemacht.

In der Drehstellung $\Phi = 0^\circ$ reicht die Erzeugende 16 bzw. die Umfangskontur 15 der Schleifscheibe 14 über die Bohrermitte bzw. Bohrerachse 7 hinaus, wobei das überstandsmaß bzw. die übermittestellung Sü = 18 3 bis 15% des Bohrerdurchmesers beträgt. Die kleineren Werte gelten für die Bearbeitung weicheren Werkstoffes, die größeren Werte für den Einsatz des Bohrers 1 zur Bearbeitung härterer Werkstoffe, wo der Bohrer eine größere Stabilität aufweisen muß.

Mit fortlaufendem Anschliff und fortschreitender Drehung des Bohrers 1 über die Drehstellung $\Phi = 0^\circ$

in Schnittrichtung 9 wird die Erzeugende 16 radial aus der übermittestellung (Fig. 6 + 9 ) herausbewegt und in Richtung dieses Radialvorschubes des Bohrers 1 weiterbewegt. Dies geschieht beim Ausführungsbeispiel durch eine translatorische Bewegung der Bohrerachse 7 in einem rechten Winkel zu ihrer Längsrichtung. Dieser Radialvorschub $H_R$ ist in Pfeilrichtung 19 wirksam. Bei Abschluß des Anschliffes (Drehstellungswinkel $\Phi$ = 90; Fig. 7, 12) weist die Erzeugende 16 bzw. die Umfangskontur 15 der Schleifscheibe 14 einen Vormittestand Ü = 20 auf, der 7 bis 14% des Bohrerdurchmessers 8 beträgt- Dabei gilt der untere Zahlenwert 7 für einen großen Bohrerdurchmesser 8 und weichen zu bearbeitenden Werkstoff, während der größere Wert von 14% für einen kleineren Bohrerdurchmesser 8 und einen harten zu bearbeitenden Werkstoff gilt.

Wahrend des Anschliffes erfolgt ein Axialvorschub des Bohrers 1 relativ zur Schleifscheibe 14, und zwar in Pfeilrichtung 21. Dieser Axialvorschub setzt sich zusammen aus dem Grundvorschub $H_G$, welcher proportional zum Radialvorschub $H_R$ (Pfeilrichtung 19) erfolgt. Durch diesen Grundvorschub $H_G$ wird bewirkt, daß der Bohrer immer in Kontakt mit der Schleifscheibenoberfläche 22 bleibt. Der anteilige Grundvorschub $H_G$ am Axialvorschub (Pfeilrichtung 21) stellt somit lediglich eine Kompensation des Radialvorschubes $H_R$ - (Pfeilrichtung 19) dar, ohne für sich allein bereits den Freiflächenanschliff zu bewirken bzw. den Freiwinkel zu bestimmen. Letzteres erfolgt durch den zusätzlichen Axialvorschubanteil $H_A$, welcher mit fortlaufender Drehstellung $\Phi$ des Bohrers progressiv bis zur Erreichung der Anschliffendstellung $\Phi$ = 90° zunimmt (Schaubild gemäß Fig. 14 und 15). Die Zunahme entspricht vorzugsweise einer e-Funktion. Dadurch wird ausgehend vom Anschliff der Hauptschneide 3 über den gesamten Anschliffbereich der resultierende, in Pfeilrichtung 21 wirksame Axialvorschub der Erzeugenden 16 in Axialrichtung des Bohrers 1 derart progressiv gestaltet, daß mit zunehmendem Fortschreiten des Drehwinkels $\Phi$ bzw. mit zunehmendem Abstand von der Hauptschneide 3 der Stirnfreiwinkel der Hauptschneide 3 zunimmt.

Der Verlauf des in Pfeilrichtung 19 wirksamen Radialvorschubes mit fortlaufender Drehstellung $\Phi$ des Bohrers kann wahlweise linear nach Fig. 14 und 15 oder progressiv nach Fig. 16 und 17 sein. Bei Fertigung nach Fig. 16 und 17 kann man gegenüber einer Fertigung nach Fig.14 und 15 eine erforderliche Zustellachse an der Schleifmaschine einsparen.

Nachstehend sind einzelne Beispiele 1 bis 3 aufgeführt. Daraus ist ersichtlich, daß bei einem Bohrerdurchmesser von 8,3 mm ein Seitenfreiwinkel $\alpha_X$ von 6° ausreicht, um mit dem Bohrer Vorschübe von 0,34 mm/U fahren zu können. Demgegenüber werden bei Bohrern mit Kegelmantelanschliff nach dem heutigen Stand der Technik bei entsprechenden Bohrerdurchmessern Seitenfreiwinkel $\alpha_X$ von 10° empfohlen, wobei diese Freiwinkel Vorschübe von ca. 0,12 bis 0,16 mm/U ermöglichen.

Je nach dem zu bearbeitenden Werkstoff kann die Hauptschneide 3 mit einer Schutzfase 23 versehen oder durch eine Kantenverrundung verstärkt werden. Die Schutzfase verläuft dann annähernd stetig in die Querschneide 6.

Bei dem erfindungsgemäßen Spiralbohrer beträgt der Keilwinkel $\beta_Z$ (= 25; Fig. 5 ) im Bereich der Bohrerspitze 11 ca. 60° bis 120°.

Dieser stabile Keilwinkel 25 ermöglicht die Aufnahme hoher Vorschubkräfte (Druckkräfte) bei ausreichend guten Zentriereigenschaften.

Der Betrag des Keilwinkels $\beta_z$ (25) ist durch den Spitzenwinkel $\sigma$ (12), den Schleifscheibenradius 24 und insbesondere das überstandsmaß Sü (18) definiert.

Der durch den Keilwinkel $\beta_z$ (25) bedingte negative Spanwinkel $\gamma$ im Zentrum (= 0,5 x $\beta_z$) verringert sich von der Bohrerspitze ausgehend nach außen stetig und hat beim übergang in die Hauptschneide einen Betrag von etwa -20° bis +10°, insbesondere 0° (siehe Fig. 13).

Von besonderem Vorteil ist der für einen Spiralbohrer außerordentlich niedrige Seitenfreiwinkel von beispielsweise nur 6° (siehe Beispiel 1 und 2).

Die axiale Steigung der Freiflächen 10 verlauft progressiv mit zunehmendem Abstand Von den Schneiden 3. Hierdurch wird bei relativ geringen Freiwinkeln, also stabilen Keilwinkeln ein größtmöglicher Spanraum zwischen den Querschneiden 6 und Freiflächen 10 erzeugt.

Dadurch ist ein einwandfreier Abfluß der Späne von den Querschneiden 6 möglich.

**BEISPIEL 1**

**1. Vollhartmetallbohrer ∅ 13,5**

Hartmetallqualität P40 (beschichtet)

$\sigma$ = 140°
$\alpha_x$ = 6°

Ü = 1,25 mm
SÜ = 0,7 mm
$\vartheta$ = 46° = konst.
$H_{90}$ = 3,0 mm
erreichte Schnittdaten beim Einsatz
**Versuchswerkstoff:** Ck 45
**Drehzahl:** n = 2850 $min^{-1}$
**Schnittgeschwindigkeit:** vc = 120 m/min
**Vorschub je Umdrehung:** f = 0,6 mm
**Vorschub je Minute:** vf = 1710 mm/min
**Bohrtiefe:** lf = 25 mm
**Spanform:** kurze Bröckelspäne

**BEISPIEL 2**

**2. Vollhartmetallbohrer ∅ 8,3**

Hartmetallqualität P40 (beschichtet)

$\sigma$ = 140°
$\alpha_x$ = 6°
Ü = 0,85 mm
SÜ = 0,42 mm
$\vartheta$ = 43° = konst.
$H_{90}$ = 1,91 mm
erreichte Schnittdaten beim Einsatz:
**Versuchswerkstoff:** C 35
**Drehzahl:** n = 3200 $min^{-1}$
**Schnittgeschwindigkeit:** vc = 83 m/min
**Vorschub je Umdrehung:** f = 0,3 mm
**Vorschub je Minute:** vf = 1100 mm/min
**Bohrtiefe:** lf = 18 mm
**erreichter Standweg:** L = 12,7 m
**Spanform:** kurze Bröckelspäne

**BEISPIEL 3**

| Bohrer | Vc (m/min) | f (mm/U) |
|---|---|---|
| HSS-Bohrer | 20 - 30 | 0,12 - 0,2 |
| HSS-Bohrer TIN-besch. | 25 - 35 | 0,2 - 0,3 |
| VHM-Bohrer 3-schneidig herkömmlich | 80 - 100 | 0,12 - 0,2 |
| Erfindungs-gegenstand | 80 - 100 | 0,5 |

Werkstoff 50CrV4
Festigkeit 800 $N/mm^2$
Bohrerdurchmesser 10,5 mm

## Patentansprüche

**1.** Verfahren zum Anschleifen eines Spiralbohrers, insbesondere eines Hartmetallbohrers, mit einer wirksamen Kerndicke K (4) von 25 bis 40% des Bohrerdurchmessers (8) bei sich über die gesamte Kerndicke K (4) erstreckender, S-förmiger Querschneide (6), die annähernd stetig in die Hauptschneiden übergeht, und mit durch Schraubenflächenschliff geschliffenen Hauptfreiflächen (10)

mitfolgenden Merkmalen:

a) Zu Beginn des Anschliffes und in einer relativen Drehstellung $\Phi = 0^\circ$ des Bohrers (1) zur Schleifscheibenoberfläche (22), in der im wesentlichen die Hauptschneide (3) geschliffen wird (Fig. 12,15), reicht die zur Erzeugung der Hauptfreifläche (10) bestimmte Schleifscheibenoberfläche (14) mit ihrer Umfangskontur (15) über die Bohrerachse (7) hinaus,

- wobei das Überstandsmaß SÜ (18) 3 bis 15% des Bohrerdurchmessers (8) beträgt.

b) Mit fortlaufendem Anschliffwird die Schleifscheibe (14) radial aus der Übermittestellung SÜ heraus und weiterin eine Vormittestellung fortbewegt (Radialvorschub 19), bis sie bei Vollendung des Hauptfreiflächenanschliffs ( $\Phi = 90^\circ$ ) einen Vormitteabstand Ü (20) von der Bohrerachse (7) aufweist,

- welcher 7 bis 14% des Bohrerdurchmessers (8) beträgt.

c) Vom Anschliff der Hauptschneide (3) ausgehend über den gesamten Anschliffbereich vergrößert sich der Axialvorschub (21) der Erzeugenden (16) in Axialrichtung des Bohrers (1) progressiv derart, daß mitzunehmendem Abstand von der Hauptschneide (3) deren Stirnfreiwinkel zunimmt.

**2.** Verfahren nach Anspruch 1,

gekennzeichnet durch

einen Spitzenwinkel $\delta$ (12) von mindestens $130^\circ$.

## Claims

**1.** A method for grinding a twist drill, in particular a hard metal drill, with an effective core thickness K(4) of 25 to 40% of the drill diameter (8), with an S-shaped chisel edge (6) extending over the whole core thickness K (4) which passes at an approximately constant rate into the main cutting edges, and with main flanks (10) ground in a helical surface grinding process,

with the following characteristics:

a) at the start of the grinding and in a relative rotational position of $\Phi = 0^\circ$ of the drill (1) to the grinding disc surface (22) wherein mainly the main cutting edge (3) is ground (Figures 12, 15), the grinding disc surface (14) intended for producing the main flank (10) projects with its peripheral contour (15) beyond the drill axis (7),

- in which arrangement the projection dimension SÜ (18) amounts to 3 to 15% of the drill diameter (8).

b) In the continuing grinding process, the grinding disc (14) is moved radially out of the beyond centre position SÜ and further into an ahead of centre position (radial advance 19) until on completion of the grinding of the main free flanks ($\Phi = 90^\circ$), it has an ahead of centre distance Ü (20) from the drill axis (7)

- which amounts to 7 to 14% of the drill diameter (8).

c) Starting with the grinding of the main cutting edge (3), the axial advance (21) of the generatrix (16) progressively increases over the whole grinding zone in the axial direction of the drill (1) in such a way that with an increasing distance from the main cutting edge (3) its front clearance angle increases.

**2.** Method according to Claim 1,

characterized by

a tip angle $\delta$ (12) of at least $130^\circ$.

## Revendications

**1.** Procédé de meulage d'un foret hélicoïdal, en particulier d'un foret en métal dur, avec une épaisseur de lame centrale efficace K (4) de 25 à 40 % du diamètre (8) du foret lorsque l'arête transversale (6) en forme de S s'étend sur toute l'épaisseur de lame centrale K (4), arête transversale qui se transforme

sensiblement continuellement en les arêtes principales de coupe, et avec des faces de dépouille principales (10) meulées par meulage de surface hélicoïdale, présentant les caractéristiques suivantes :

a) au début du meulage et dans une position de rotation relative $\Phi = 0^\circ$ du foret (1) par rapport à la surface (22) de la meule, dans laquelle essentiellement l'arête principale de coupe (3) est meulée (figures 12, 15), la surface de meule (14) déterminée pour la formation de la face de dépouille principale (10) dépasse de l'axe (7) du foret par son contour périphérique (15),

- l'ampleur de dépassement SU (18), étant égale à 3 à 15 % du diamètre (8) du foret,

b) lorsque le meulage progresse, la meule (14) se déplace radialement à partir de la position de dépassement de centre SU jusque dans une position de précentre (avance radiale 19) jusqu'à ce qu'elle présente avec l'axe (7) du foret lors de l'achèvement du meulage de la face de dépouille principale ($\Phi = 90^\circ$) une distance de précentre U (20),

- qui est égale à 7 à 14 % du diamètre (8) du foret,

c) à partir du meulage de l'arête principale de coupe (3) et sur tout le domaine de meulage, l'avance axiale (21) de la génératrice (16) augmente progressivement en direction axiale du foret (1) de telle manière que lorsque la distance de l'arête principale de coupe (3) augmente l'angle de dépouille frontal de celle-ci augmente.

**2.** Procédé selon la revendication 1, caractérisé par un angle de sommet $\delta$ (12) d'au moins $130^\circ$.

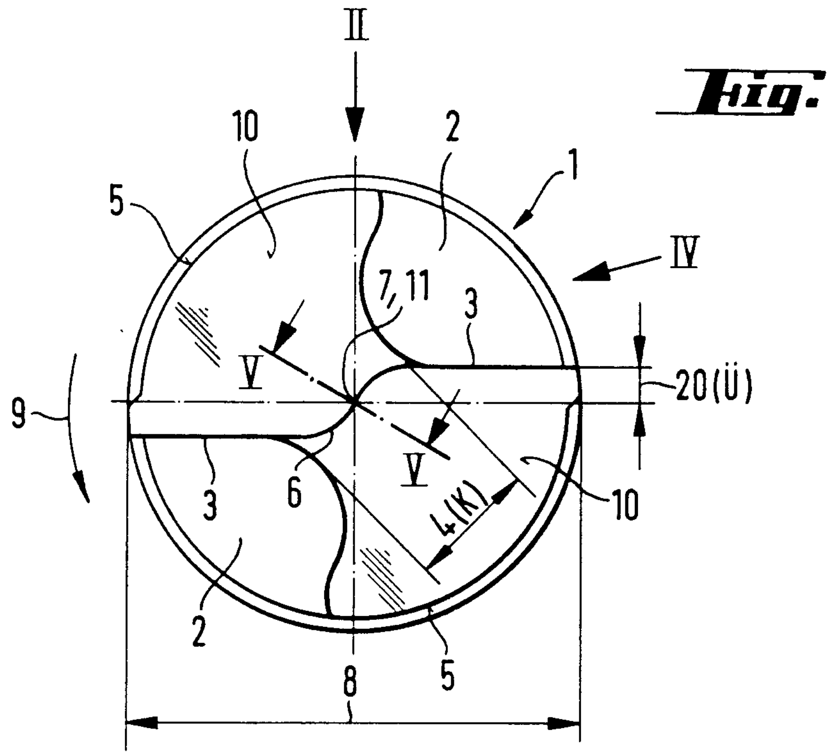


Fig. 1

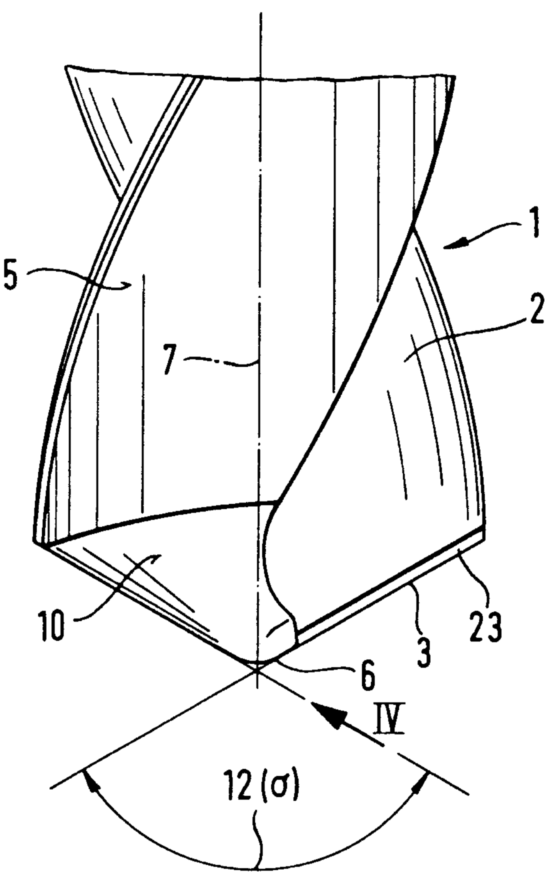


Fig. 2

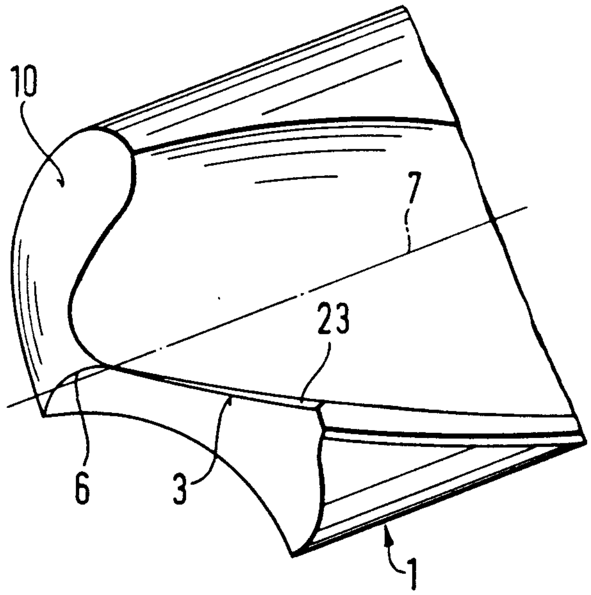


Fig. 4

Fig. 3

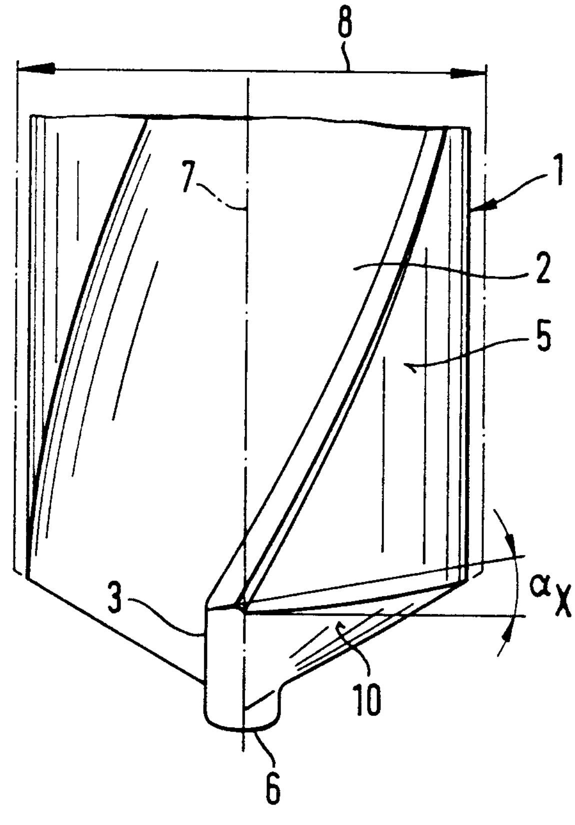


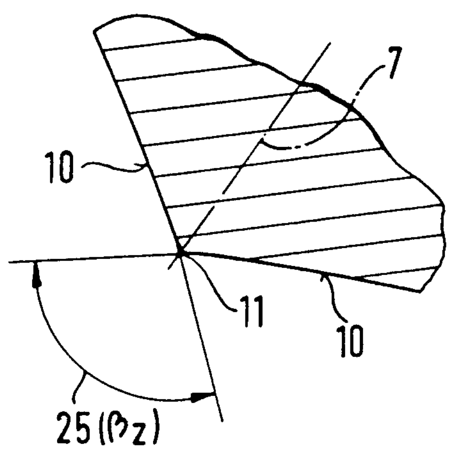


Fig. 5

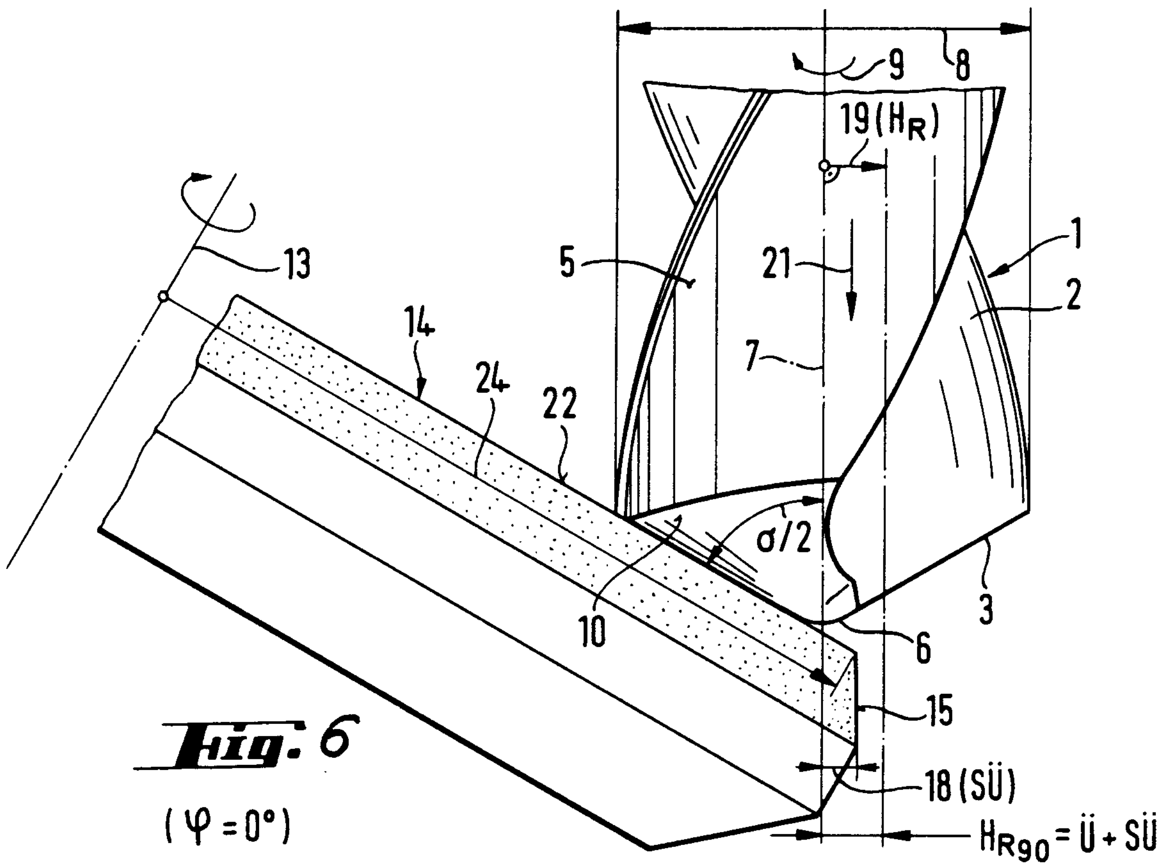


Fig. 6

( φ = 0° )

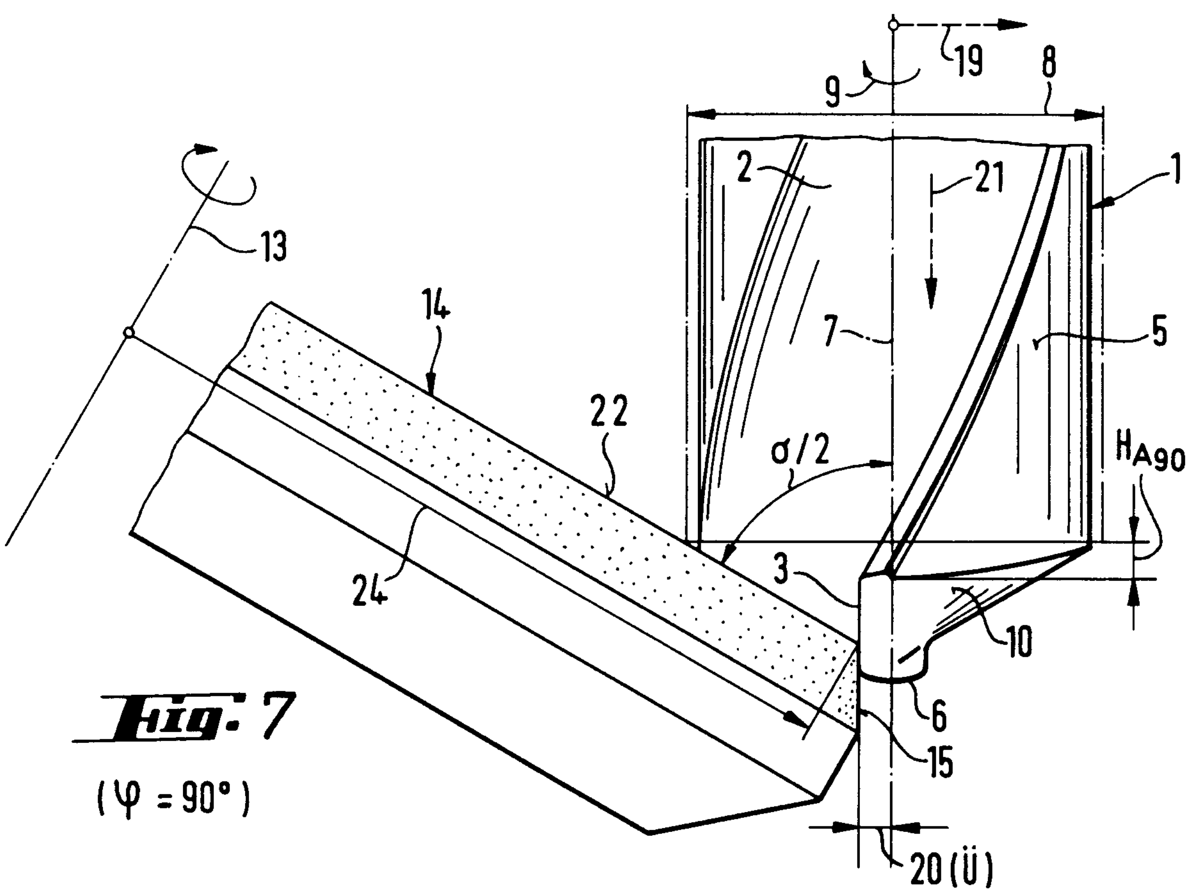


Fig. 7

( φ = 90° )

Fig. 8

(φ = -30°)

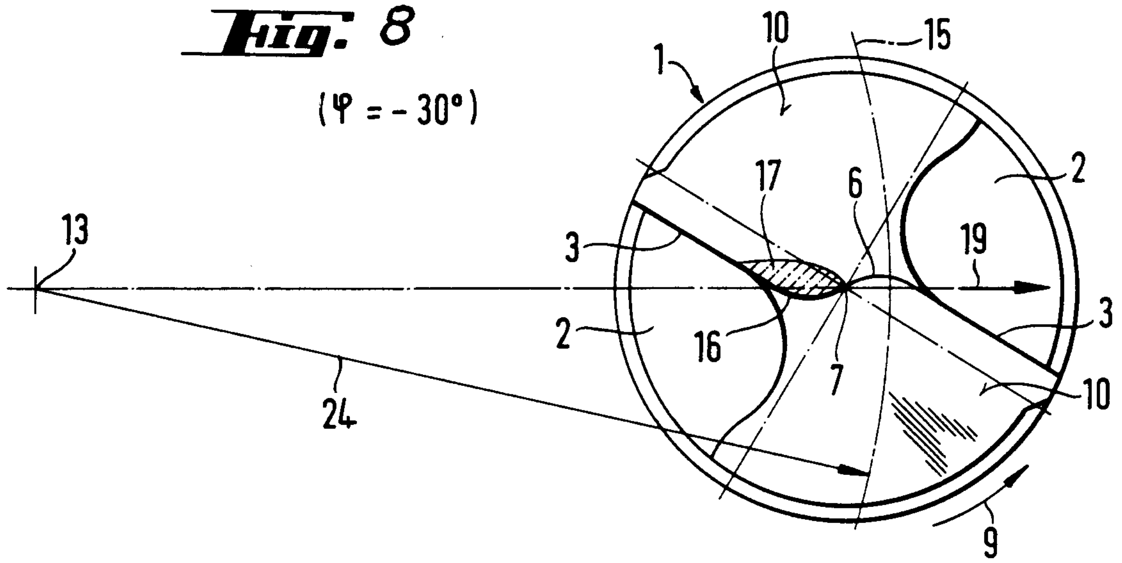


Fig. 9

(φ = 0°)

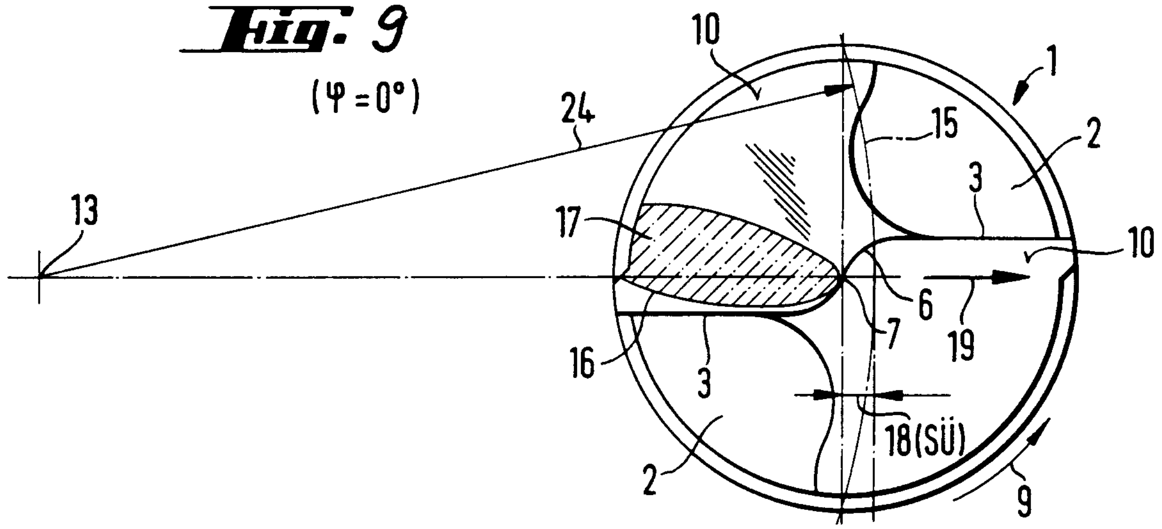


Fig. 10

(φ = 30°)

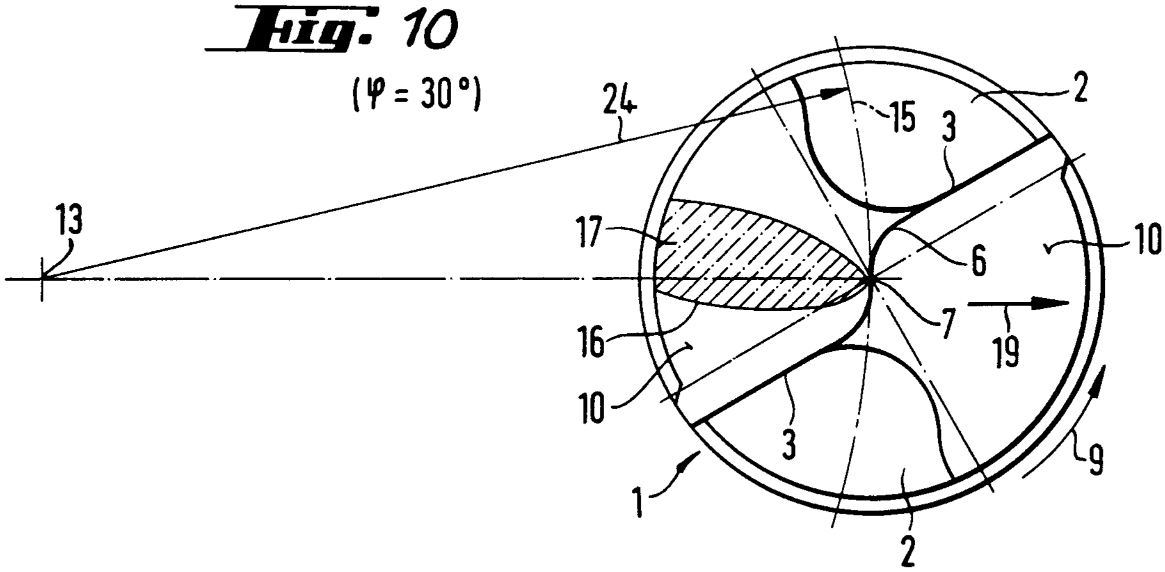

Fig. 11

(φ = 60°)

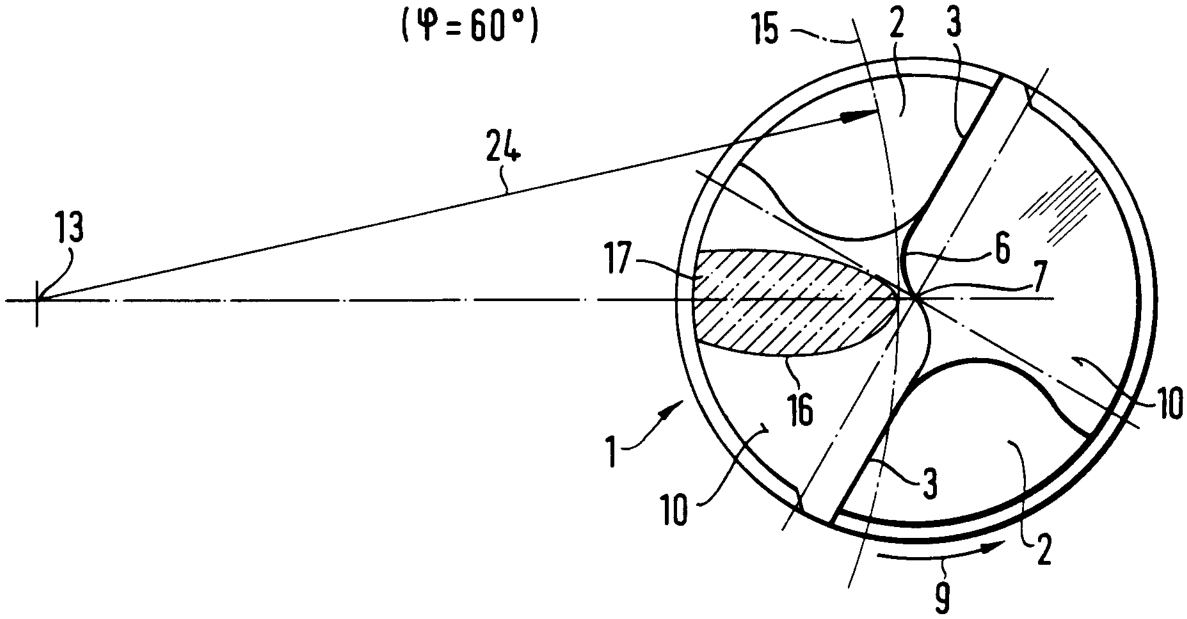


Fig. 12

(φ = 90°)

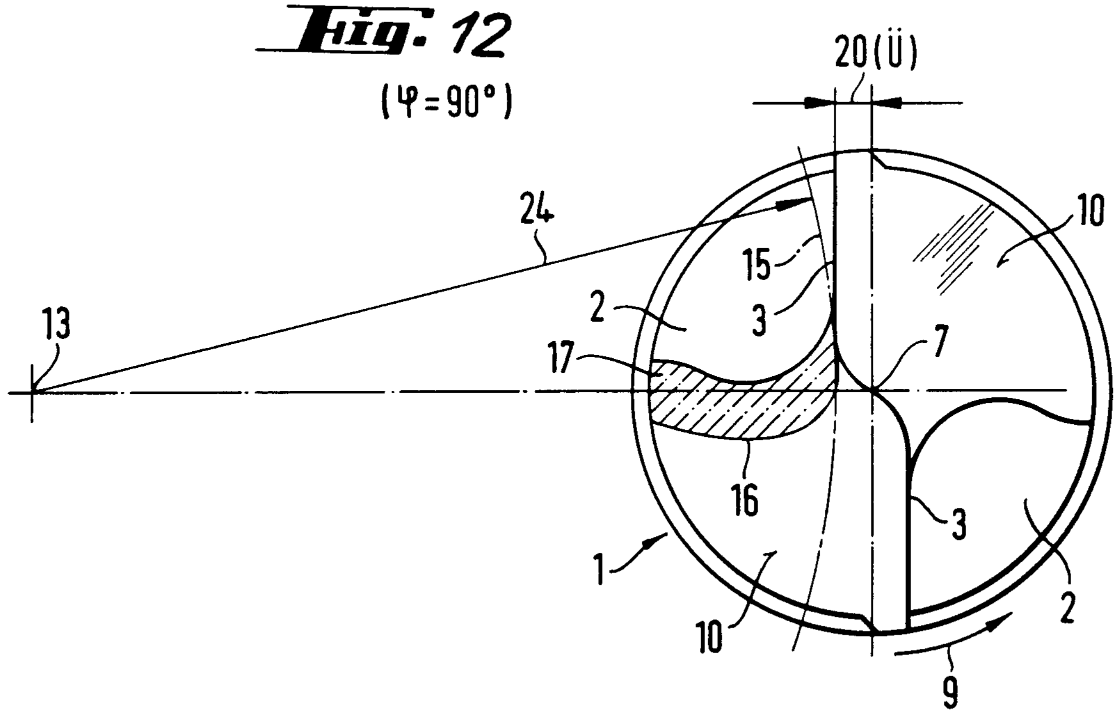

Fig. 13 VERLAUF DES AXIALEN SPANWINKELS VOM ZENTRUM BIS ZUM BOHRERAUSSENDURCHMESSER

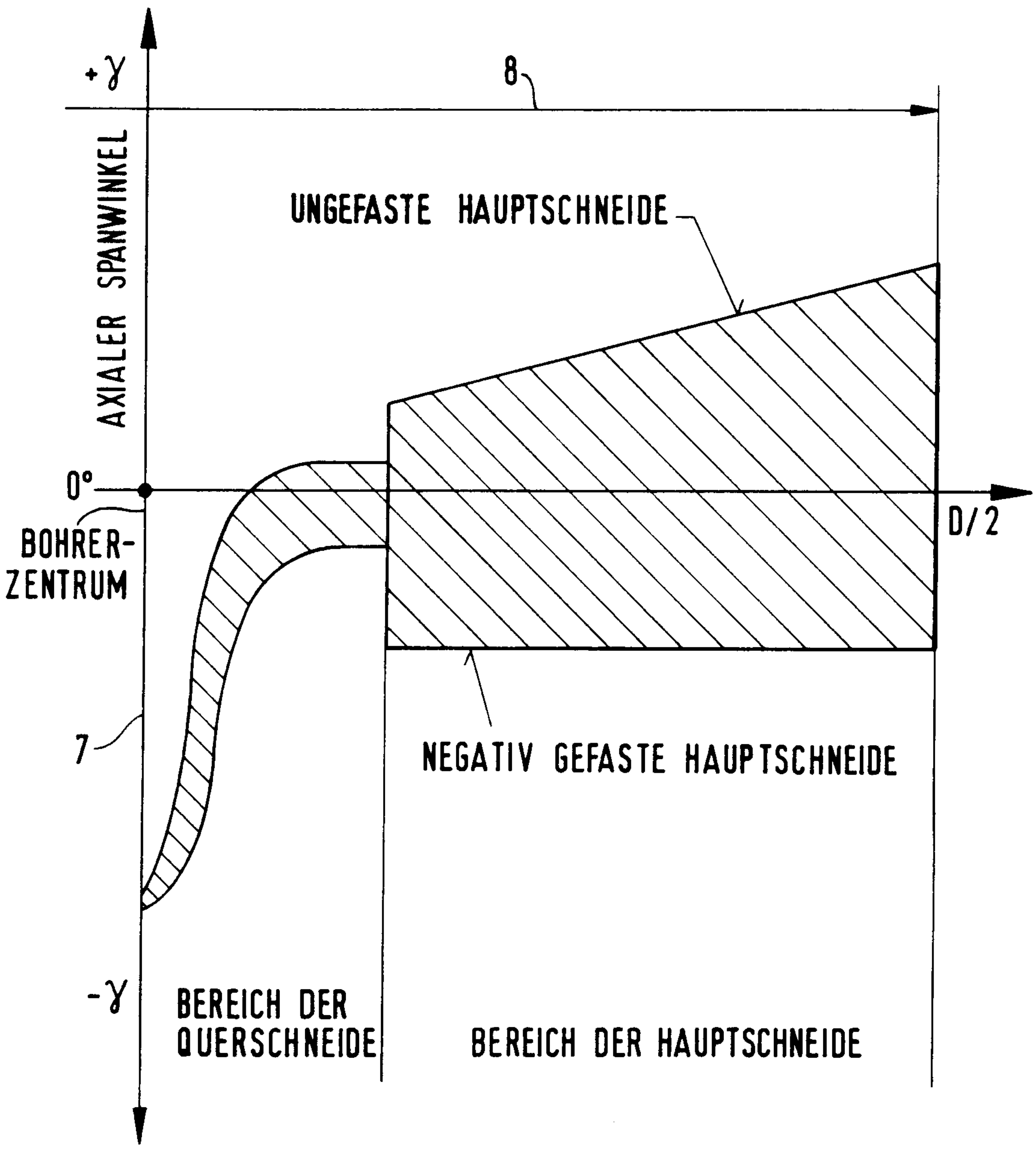

Fig. 14

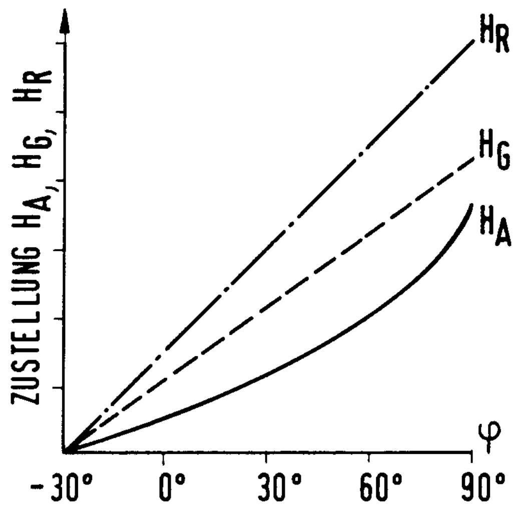


Fig. 16

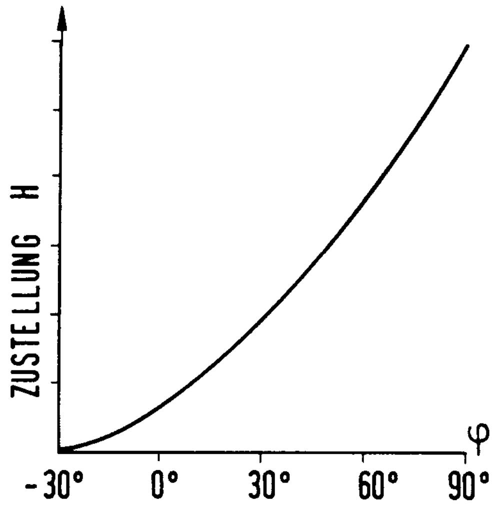


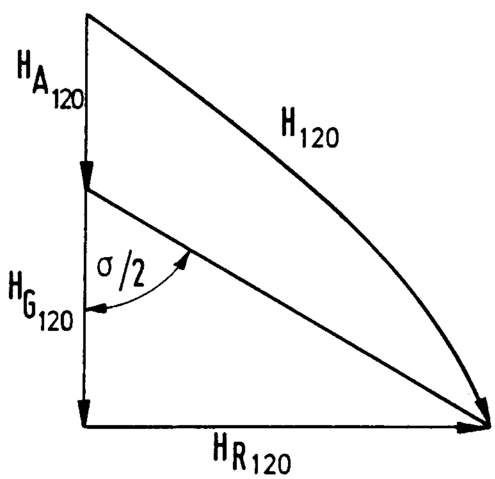


Fig. 15

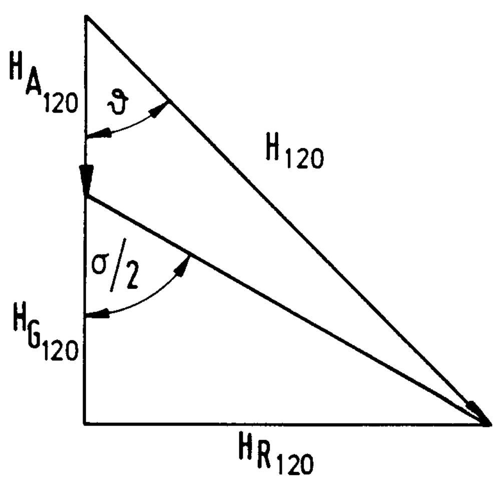


Fig. 17